# EUROPÄISCHE PATENTSCHRIFT

(11) **EP 1 785 703 B1**
(45) Veröffentlichungstag und Bekanntmachung des Hinweises auf die Patenterteilung: **21.12.2011**
(21) Anmeldenummer: 05110766.2
(22) Anmeldetag: 15.11.2005
(51) Int. Cl.: G01G 21/30

(54) **Verfahren zur Überwachung und/oder zur Bestimmung des Zustandes einer Kraftmessvorrichtung und Kraftmessvorrichtung**
Method for monitoring and/or determining the condition of a force measuring device and force measuring device
Procédé destiné à la surveillance et/ou la détermination de l'état d'un dispositif de mesure de force et dispositif de mesure de force

(43) Veröffentlichungstag der Anmeldung: 16.05.2007
(73) Patentinhaber: Mettler-Toledo AG, 8606 Greifensee (CH)
(72) Erfinder: Tellenbach, Jean-Maurice, 8442, Hettlingen (CH); Aepli, Daniel, 8606, Greifensee (CH); Bäumel, Helmut, 8606, Greifensee (CH)

(56) Entgegenhaltungen:
- EP-A- 0 737 851
- EP-A- 1 347 274
- DE-A1- 3 639 521
- DE-A1- 19 937 203
- US-A1- 2002 066 602
- US-A1- 2005 072 605

## Beschreibung

Die vorliegende Erfindung betrifft ein Verfahren zur Überwachung und/oder zur Bestimmung des Zustandes einer Kraftmessvorrichtung mit mindestens einem, einen Innenraum aufweisenden Gehäuse und mit mindestens einer, im Innenraum des mindestens einen Gehäuses eingebauten Kraftmesszelle, sowie eine zur Ausführung des Verfahrens geeignete Kraftmessvorrichtung.

Viele Kraftmessvorrichtungen, insbesondere gravimetrische Messgeräte wie beispielsweise Waagen, Thermogravimetriegeräte, Messgeräte zur gravimetrischen Feuchtigkeitsbestimmung, Wägemodule für Tankanlagen und Reaktorbehälter, Wägemodule und Mehrfachwägevorrichtungen in Abfüll- und Verpackungsanlagen, aber auch Drehmoment- und Beschleunigungsmessvorrichtungen werden hinsichtlich ihrer teilweise sehr aggressiven Einsatzumgebung mit wirkungsvollen Massnahmen vor Zerstörung geschützt. Diese Schutzmassnahmen sind auf die Einsatzumgebung angepasste Gehäuse, welche entsprechende Vorschriften im Bezug auf das Eindringen von Staub, Feuchtigkeit und dergleichen erfüllen müssen, wie diese beispielsweise in den Ingress Protection Ratings nach EN60529 klassifiziert sind.

Hochlast- Kraftmesszellen für Wägemodule, so genannte Tank- oder Reaktorbehälter-Wägemodule sind beispielsweise in gasdicht verschweissten, rostfreien Stahlgehäusen eingebaut. Die in solchen Gehäusen untergebrachten Kraftmesszellen arbeiten problemlos, solange das Gehäuse die das Wägesignal beeinträchtigenden Umwelteinflüsse von der Kraftmesszelle fernhält. Meistens werden die Kraftmesszellen bei undichten Gehäusen auch nicht schlagartig zerstört, es findet vielmehr eine schleichende Zerstörung statt, welche häufig erst spät festgestellt wird. Sofern die Messeinrichtung in Industrieanlagen mit hohem Automatisierungsgrad eingebaut ist, kann ein Defekt der Messeinrichtung zu langer Ausfallzeit der Anlage oder zu fehlerhaften Produkten führen.

Je nach Umgebungsbedingungen müssen die Kraftmessvorrichtungen nicht zwingend hermetisch gekapselt sein. Einfachere und kostengünstigere Gehäuse mit berührungsfreien Durchführungen wie sie beispielsweise in der DE 101 49 606 C2 offenbart werden, können ebenfalls in der Industrieumgebung eingesetzt werden. Auch normale Waagengehäuse erfüllen bei entsprechenden Umgebungsbedingungen ihren Zweck. Allerdings kann durch einen Manipulationsfehler zum Beispiel Flüssigkeit ins Innere des Gehäuses eindringen und die relative Feuchte des Gehäuseinnenraumes derart erhöhen, dass Teile der Kraftmesszelle oder die Elektronik- Komponenten der Signalverarbeitung korrodieren.

Oftmals werden Kraftmessvorrichtungen bis zu ihrer Inbetriebnahme über weite Strecken transportiert und zwischengelagert. Dabei kann sich in ungeeigneter Transport- oder Lagerumgebung im Gehäuseinnern ein Kondensat bilden, das die Messperformance empfindlich beeinträchtigen kann.

Die Inspektion der Kraftmesszelle ist je nach umgebendem Gehäuse mit sehr hohem Aufwand verbunden oder gar unmöglich. Eine periodische Überprüfung der in Anlagen eingesetzten Kraftmessvorrichtungen ist aufwändig und teuer.

In der EP 1 347 277 B1 wird eine Kraftmesszelle offenbart, die zusätzlich einen Temperatursensor aufweist. Die analogen Signale der Kraftmesszelle werden mittels einer ersten Wandlerschaltung und die vom Temperaturfühler abgegebenen analogen Signale mittels einer zweiten Wandlerschaltung in zweiwertige pulsweitenmodulierte Signale gewandelt. Diese Signale werden über Verbindungsleitungen zu einem Prozessormodul übertragen und von diesem mittels aus einem Speichermodul abrufbaren Kompensationsdaten weiter verarbeitet. Durch die Verarbeitung der Kraftmesszellen- Signale mit den Temperatursensor- Signalen wird die Temperaturdrift der Wägezelle korrigiert. Durch die Behandlung des Wägesignals in dieser Art können zwar die Einwirkungen der Umwelt auf das Wägeergebnis ausreichend kompensiert werden, der eigentliche Zustand der Kraftmesszelle ist aber dadurch nicht ermittelbar.

Die DE 36 39 521 A1 offenbart eine Vorrichtung und ein Verfahren, bei welchen eine Waage mit eingebautem Kalibriergewicht vermittels eines Signalelements zu einer Neukalibrierung auffordert, falls eine vorgegebene Temperaturänderung seit der letzten Kalibrierung überschritten wird. Dazu wird das Ausgangssignal eines Temperaturaufnehmers als Hauptstörgrösse ständig überwacht und mit einem bei der letzten Kalibrierung abgespeicherten Temperaturwert verglichen.

Der vorliegenden Erfindung liegt daher die Aufgabe zugrunde, ein Verfahren zur Überwachung und/oder zur Bestimmung des Zustandes einer, in einem Gehäuse angeordnete Kraftmesszelle anzugeben, ohne dass dieses Gehäuse zwecks Zustandsbestimmung der Kraftmesszelle geöffnet werden muss.

Diese Aufgabe wird mit einem Verfahren und einer Kraftmessvorrichtung gelöst, welche die im Anspruch 1 bzw. 10 angegebenen Merkmale aufweisen.

In einem Verfahren zur Überwachung und/oder zur Bestimmung des Zustandes einer Kraftmessvorrichtung mit mindestens einem, einen Innenraum aufweisenden Gehäuse und mit mindestens einer, im Innenraum des mindestens einen Gehäuses eingebauten Kraftmesszelle wird durch mindestens einen im Innenraum des Gehäuses oder mindestens einen, am Gehäuse angeordneter Sensor mindestens ein die Lebensdauer der Kraftmesszelle beeinflussender Parameter des Innenraumklimas gemessen und ein, dem gemessenen Parameter des Innenraumklimas entsprechendes Sensorsignal an eine Recheneinheit und/oder an eine Ausgabe übermittelt.

Sofern der Parameter des Innenraumklimas auch das Wägesignal der Kraftmessvorrichtung beeinflusst, kann durch den mindestens einen Sensor oder durch einen zusätzlichen Sensor ein dem gemessenen Parameter des Innenraumklimas entsprechendes Sensorsignal der Recheneinheit zugeführt und in der Recheneinheit mit einem oberen Benutzungsgrenzwert und/oder einem unteren Benutzungsgrenzwert verglichen werden. Bei Verletzung eines dieser Benutzungsgrenzwerte wird das Sensorsignal oder ein Ausgabesignal der Recheneinheit an eine Ausgabe übermittelt.

Selbstverständlich kann durch den mindestens einen Sensor auch kontinuierlich oder periodisch und/oder zufällig ein Sensorsignal mindestens eines, die Lebensdauer der Kraftmesszelle und/oder das Wägesignal beeinflussenden Parameters des Innenraumklimas ermittelt werden.

Eine kontinuierliche Erfassung der Sensorsignale hat den Vorteil, dass der ganze Signalverlauf des Sensors vorhanden ist, welcher über die Belastungshöhe und Belastungsdauer des entsprechenden Parameters des Innenraumklimas auf die Kraftmesszelle Auskunft gibt und dadurch zur Berechnung der Restlebensdauer herangezogen werden kann.

Zufällig bedeutet in diesem Zusammenhang, dass eine Signalerfassung oder Signalgenerierung nicht nach einem fixen Zeitablauf ausgelöst wird sondern beispielsweise durch einen Zufallsgenerator oder durch den Benutzer initialisiert wird. Diese Initialisierung kann die Erfassung eines einzelnen Signals verursachen, jedoch aber auch über eine vorbestimmte Zeit eine periodische Signalerfassung auslösen.

Vorzugsweise wird durch den mindestens einen Sensor die Veränderung mindestens eines, die Lebensdauer der. Kraftmesszelle und/oder das Wägesignal beeinflussenden Parameters des Innenraumklimas detektiert, und ein dieser Veränderung entsprechendes Sensorsignal ermittelt. Dieses Sensorsignal kann automatisch an die Ausgabe oder Recheneinheit weitergeleitet werden.

Unter dem Begriff Recheneinheit werden alle signalverarbeitenden Elemente wie analoge Schaltkreise, digitale Schaltkreise, integrierte Schaltkreise, Prozessoren, Computer und dergleichen verstanden, die die durch den Sensor generierten Sensorsignale mit bereits in der Recheneinheit gespeicherten oder eingestellten Werten vergleichen. Diese Werte, insbesondere Maximalwerte, Schwellwerte und Benutzungsgrenzwerte können aus Regelwerken wie nationalen oder internationalen Normen stammen, aus Vergleichsmessungen ermittelt oder vom Hersteller der Kraftmessvorrichtung festgelegt worden sein.

Maximalwerte und Schwellwerte sind meist abhängig von der Auslegung der Kraftmessvorrichtung und werden in der Regel durch den Hersteller, eventuell aber auch durch den Benutzer festgelegt. Schwellwerte definieren Zustandsgrenzwerte, bei deren Überschreitung ein bleibender Schaden an der Wägezelle verursacht wird, dieser bleibende Schaden aber die Kraftmessvorrichtung nicht prinzipiell unbrauchbar macht. Durch erneute Kalibrierung der Kraftmessvorrichtung nach dem Überschreiten des Schwellwertes kann die Veränderung kompensiert werden. Eine mehrfache Überschreitung des Schwellwerts kann eine schrittweise Zerstörung der Kraftmessvorrichtung bedeuten, bis hin zu einem Zustand, der nicht mehr mittels einer Kalibrierung kompensiert werden kann. Dieser Zustand wird im Maximalwert ausgedrückt und abgebildet. Selbstverständlich kann ein Maximalwert auch durch ein einmaliges Ereignis erreicht werden, sofern sich die im Gehäuse herrschenden Innenraumklima-Werte sehr stark verändern oder weitere Einwirkungen wie beispielsweise Schläge auf die Kraftmessvorrichtung zur Zerstörung derselben führen.

Diese Werte können in geeigneter Form in der Recheneinheit gespeichert sein. Dabei kann die Kraftmessvorrichtung bei Bedarf auch mehrere Recheneinheiten aufweisen, beispielsweise kann für jeden eingebauten Sensor eine eigene Recheneinheit vorhanden sein. Als Benutzungsgrenzwerte sind beispielsweise festgelegt:
- Luftdruckgrenzen nach OIML R60: +95kPa bis +105kPa
- Temperaturgrenzen nach OIML R60: Klasse II, +10°C bis +30°C Klasse III, -10°C bis +40°C

Die Benutzungsgrenzwerte definieren den Innenraumklima-Wertebereich, in welchem die Kraftmesszelle betrieben werden darf ohne die zulässigen Messergebnistoleranzen der Kraftmessvorrichtung zu verletzen.

Der Begriff Ausgabe steht für alle analog beziehungsweise digital arbeitenden Übermittlungs-, Melde- und Warnsysteme die geeignet sind, die durch den Sensor erzeugten Sensorsignale eines Innenraumklima- Parameters oder ein Ausgangssignal der Recheneinheit durch geeignete Mittel wie Ton, Licht, Vibrationen, elektrische Signale, elektromagnetische Impulse, numerische Ausgaben und dergleichen mehr darzustellen oder an weitere Geräte, beispielsweise weitere Ausgaben, Leitsysteme, Terminals und dergleichen zu übermitteln. Die Ausgabe kann deshalb auch ein Transponder oder Transmitter sein, welcher die Sensorsignale und/oder Ausgangssignale beispielsweise an ein portables Gerät sendet. Mittels der Ausgabe kann eine Warnung an den Benutzer ausgegeben, das Ereignis an eine Speichereinheit weitergesendet oder sogar der Hersteller oder dessen Servicestelle beispielsweise über Internetverbindungen direkt alarmiert werden.

Alle Sensoren können aktive Systeme sein, die eine Veränderung selbständig detektieren und ein Sensorsignal an die Recheneinheit und/oder an die Ausgabe weiterleiten. Aber auch passive Sensoren sind verwendbar, wobei die Sensorsignale durch die Recheneinheit periodisch abgefragt werden. Die so erfassten Daten erlauben bereits eine grobe Berechnung der Restlebensdauer, indem bei jeder Verletzung eines Schwellwertes oder Maximalwertes ein vordefinierter Betrag von der vordefinierten Lebensdauer subtrahiert wird. Eine kontinuierliche Erfassung der Sensorsignale analog einem Signalverlauf erlaubt aufgrund der miterfassten Zeitabschnitte eine sehr genaue Berechnung der Restlebensdauer.

Die erfindungsgemässe Anordnung mindestens eines Sensors innerhalb des Wägezellengehäuses erlaubt somit den aktuellen Zustand der Wägezelle zu ermitteln und im Falle mehrerer auftretender Schwellwertverletzungen gegebenenfalls auch die Restlebensdauer zu berechnen. Dabei wird das von einem Sensor ermittelte Sensorsignal in der Recheneinheit mit wenigstens einem Schwellwert verglichen und nach Überschreiten dieses Schwellwerts
a) eine entsprechende Belastung registriert;
b) eine entsprechende Belastung registriert und die Summe aller Belastungen berechnet oder
c) eine entsprechende Belastung registriert und die Summe aller Belastungen berechnet und durch Vergleich mit einem Maximalwert der zulässigen Belastungen eine zulässige Restbelastung oder Restlebensdauer berechnet.

Die Summe der Belastungen beziehungsweise die Restlebensdauer, kann entweder über die Ausgabe von der Recheneinheit abgefragt werden oder die Recheneinheit übermittelt automatisch bei jeder Registrierung einer entsprechenden Belastung, diese Angaben in Form von Ausgangssignalen an die Ausgabe. Dieses Ausgangssignal kann verschiedene Aktionen wie eine Alarmierung oder eine Kalibrierung auslösen, beziehungsweise den Messvorgang der Kraftmessvorrichtung unterbrechen.

Grundsätzlich ist es unerheblich, wo der Sensor innerhalb des Gehäuses installiert ist. Er kann an der Innenseite des Wägezellengehäuses oder an der Wägezelle selbst angebracht sein oder auch beispielsweise in der Platine der Signalverarbeitung integriert sein. Sogar an der Aussenseite des Wägezellengehäuses ist eine Anordnung des Sensors vorstellbar, sofern eine geeignete Verbindung zwischen dem Innenraum und dem Sensor besteht, um einen entsprechenden Parameter des Innenraumklimas genügend genau zu erfassen. Zum Beispiel kann ein Temperatursensoren auf der Gehäuse- Aussenseite angebracht sein, wenn die Sensor- Kontaktfläche des Gehäuses einen ausreichende Wärmekonvektion vom Innenraum zum Sensor gewährleistet. Auch Drucksensoren können an der Aussenseite des Gehäuses angebracht sein, sofern eine entsprechende Verbindung zum Innenraum hergestellt ist oder das Gehäuse zumindest eine membranförmig ausgebildete Stelle aufweist, vermittels deren Dehnung der Parameter Druck des Innenraumklimas erfasst werden kann.

In einer besonders bevorzugten Ausgestaltung wird die Summe aller Belastungen die auf die Kraftmesszelle einwirken, durch Integration
a) des gesamten Verlaufs der Sensorsignale des mindestens einen Sensors oder
b) des Verlaufs der Sensorsignale des mindestens einen Sensors nach Überschreiten eines Schwellwerts oder
c) der Zeitabschnitte während derer die Sensorsignale des mindestens einen Sensors über dem bzw. den Schwellwerten liegt,
bestimmt und nach Überschreiten des Maximalwerts der Zustand der Kraftmesszelle bzw. das Überschreiten des Maximalwerts an die Ausgabe übermittelt.

Das der Ausgabe zugeführte Sensorsignal oder das Ausgangssignal der Recheneinheit kann verschiedene Aktionen wie eine Alarmierung, beispielsweise über ein Warnsystem oder ein Meldesystem auslösen und/oder einen Messvorgang der Kraftmessvorrichtung unterbrechen. Auch die Löschung einer Bereitschaftsanzeige, welche anzeigt, dass die Kraftmessvorrichtung betriebsbereit ist, ist denkbar.

In einer Weiterbildung kann das mindestens eine Sensorsignal oder das Ausgangssignal auch einen automatischen Kalibriervorgang der Kraftmesszelle auslösen oder vom Benutzer/Hersteller eine manuell durchgeführte Kalibrierung verlangen.

In einer bevorzugten Weiterbildung des Verfahrens werden zur Kontrolle des mindestens einen Sensors dessen an die Recheneinheit übermittelten Sensorsignale zumindest periodisch in der Recheneinheit durch einen Vergleich mit in der Recheneinheit gespeicherten oder durch die Recheneinheit gebildeten Verifizierungswerten und Verifizierungstoleranzwerten überprüft und beim Verletzen der Verifizierungswerte und/oder Verifizierungstoleranzwerte ein Fehler registriert und an die Ausgabe übermittelt. Die Verifizierungswerte sind abhängig vom verwendeten Sensor und werden meistens vom Hersteller des Sensors mitgeliefert. Wird während des Betriebs der Kraftmessvorrichtung beispielsweise ein Sensorsignal vom Sensor geliefert, das aufgrund der physikalischen Gegebenheiten nicht auftreten kann, wird dies durch die Verifizierung der Sensorsignale in der Recheneinheit erkannt. Des Weiteren können die Verifizierungswerte und Verifizierungstoleranzwerte auch mit Hilfe vorangegangener Sensorsignale oder mittels der Sensorsignale weiterer Sensoren festgelegt und/oder angepasst werden.

In einer besonders bevorzugten Weiterbildung wird mindestens ein Sensorsignal vor der Auslieferung der Kraftmessvorrichtung ermittelt, dieses Sensorsignal in der Recheneinheit ausgewertet und als Referenzwert gespeichert, zumindest nach der Auslieferung der Kraftmesszelle mit dem, dem Referenzwert zugeordneten Sensor mindestens ein Sensorsignal ermittelt, dieses Sensorsignal in einem Sensormesswert ausgedrückt und diesen Sensormesswert mit dem Referenzwert verglichen. Dieses Vorgehen kann der Kontrolle dienen, ob die Kraftmessvorrichtung unerlaubt geöffnet worden ist oder nicht.

Zur Durchführung der vorangehend beschriebenen Verfahren wird eine Kraftmessvorrichtung mit mindestens einem einen Innenraum aufweisenden Gehäuse, mindestens einer im Innenraum eingebauten Kraftmesszelle und mit mindestens einem im Innenraum des Gehäuses und/oder mindestens einem, am Gehäuse angeordneten Sensor benötigt. Der mindestens eine Sensor weist ein Triggerelement auf, wobei mindestens ein Schwellwert und/oder mindestens ein Benutzungsgrenzwert in Abhängigkeit mindestens eines die Lebensdauer der Kraftmesszelle beeinflussenden Parameters des Innenraumklimas im Triggerelement abgebildet ist. Anstelle des Sensors mit Triggerelement kann die Kraftmessvorrichtung auch mindestens einen Sensor und mindestens eine Recheneinheit und/oder eine, die Ausgabe enthaltende Ausgabeeinheit und/oder einen Messumformer sowie ein die Funktion des Triggerns ausführendes Betriebsprogramm aufweisen, wobei das Betriebsprogramm mindestens einen Wert aufweist, welcher einen Schwellwert und/oder einen Benutzungsgrenzwert in Abhängigkeit mindestens eines die Lebensdauer der Kraftmesszelle beeinflussenden Parameters des Innenraumklimas repräsentiert und/oder im Betriebsprogramm mindestens eine Befehlssequenz zum Abfragen mindestens eines Wert aus einem Speichermodul vorhanden ist, welcher mindestens einen Schwellwert und/oder einen Benutzungsgrenzwert und/oder ein Maximalwert repräsentiert. Die Kombination eines Sensors mit Triggerelement und einer Recheneinheit mit Betriebsprogramm ist seibstverständlich auch möglich.

Vorzugsweise wird ein durch das Triggerelement getriggertes Sensorsignal an eine Recheneinheit und/oder an eine Ausgabe übermittelt. Das Triggerelement selbst kann unterschiedlich aufgebaut sein. Beispielsweise ist die Verwendung eines in der WO2004104567 offenbarten Feuchtesensors auf Quarzkristallbasis denkbar, dessen hygroskopische Schicht so konzipiert ist, dass der Sensor genau dann anspricht, wenn die relative Feuchte den Schwellwert erreicht. Somit ist der Schwellwert durch die Auslegung der hygroskopischen Schicht im Sensor abgebildet. Selbstverständlich kann das Triggerelement auch als Analogschaltung mittels elektronischen Bauteilen wie Komparatorelementen oder als digitaler Schaltkreis mit einem Mikroprozessor ausgebildet sein.

Ein durch das Betriebsprogramm getriggertes Ausgangssignal der Recheneinheit kann auch an eine Ausgabe und/oder an eine weitere Recheneinheit übermittelbar sein. Sofern die Recheneinheit der Kraftmessvorrichtung und/oder eine die Ausgabe enthaltende Ausgabeeinheit und/oder ein mit dem Sensor in Verbindung stehender Messumformer über einen Mikroprozessor verfügt, können einzelne, mehrere oder alle Verfahrensschritte des Verfahrens in einem Betriebsprogramm abgebildet werden, wobei dieses Betriebsprogramm in mindestens einer Speichereinheit, welche mit der Kraftmessvorrichtung zumindest zeitweise in Verbindung steht, abgespeichert ist.

In einer Ausführung muss das vorangehend beschriebene Betriebsprogramm nicht zwingend im Prozessor eingespeichert sein, sondern kann bei Bedarf aus einer Speichereinheit ausserhalb der Kraftmessvorrichtung abgerufen und auf den entsprechenden Prozessor aufgeladen werden.

In einer Ausgestaltung der Erfindung ist die Recheneinheit und/oder eine, die Ausgabe enthaltende Ausgabeeinheit drahtlos oder drahtgebunden mit dem mindestens einen Sensor verbunden.

In einer vorteilhaften Ausgestaltung der Erfindung ist als mindestens ein Sensor ein Sensor vorgesehen, in den ein Speichermodul und/oder ein Messumformer integriert ist.

Als Sensor kann beispielsweise ein Feuchtesensor verwendet werden, welcher die Veränderung des Parameters Feuchtigkeit im Innenraum infolge eines Gehäuselecks detektiert und/oder vermittels dieses Sensors ein dem Parameter Feuchtigkeit entsprechendes Sensorsignal periodisch und/oder zufällig oder kontinuierlich ermittelt wird.

Ebenso ist als Sensor ein Temperatursensor verwendbar, welcher die Veränderung des Parameters Temperatur im Innenraum infolge einer auf das Gehäuse einwirkenden Strahlung und/oder einer gehäuseintern verursachten Erwärmung detektiert und/oder ein dem Parameter Temperatur entsprechendes Sensorsignal periodisch und/ oder zufällig oder kontinuierlich ermittelt wird.

Eine weitere Möglichkeit stellt die Verwendung eines Drucksensors dar, welcher die Veränderung des Parameters Druck im Innenraum infolge eines Gehäuselecks, einer Gehäusedeformation und/oder einer Erwärmung des Innenraums detektiert und/oder vermittels diesem Sensor ein dem Parameter Druck entsprechendes Sensorsignal periodisch und/oder zufällig oder kontinuierlich ermittelt wird.

Die Kraftmessvorrichtung kann zusätzlich zum mindestens einen Sensor einen weiteren Sensor im Innenraum des Gehäuses oder am Gehäuse zur Detektierung von Netzspannungsspitzen in einer die Kraftmesszelle speisenden Stromversorgung aufweisen.

Des Weiteren kann zusätzlich zum mindestens einen Sensor mindestens ein weiterer Sensor im Innenraum des Gehäuses oder am Gehäuse zur Detektierung von radioaktiver Bestrahlung und/oder von Schallwellen und/oder von Schlägen angeordnet sein.

Ferner kann die Kraftmessvorrichtung im Innenraum des Gehäuses oder am Gehäuse zusätzlich zum mindestens einen Sensor einen weiteren Sensor zur Ermittlung eines Sensorsignals in Abhängigkeit der Belastungszyklen der Kraftmesszelle aufweisen.

Anstelle eines zusätzlichen Sensors können die mechanischen Belastungen aber auch direkt in der Recheneinheit aus dem Wägesignal der Kraftmesszelle ermittelt werden.

Die Sensoren der Kraftmessvorrichtung können so ausgebildet sein, dass in jedem Sensor ein Speichermodul und/oder ein Messumformer und/oder ein Transmitter integriert ist.

Einzelheiten des erfindungsgemässen Verfahrens und der erfindungsgemässen Kraftmessvorrichtung ergeben sich anhand der Beschreibung der in den Zeichnungen dargestellten Ausführungsbeispiele. Es zeigen:
Figur 1 in schematischer Darstellung eine Kraftmessvorrichtung in Gestalt einer Waage im Schnitt, mit einem einen Innenraum aufweisenden Gehäuse und einer im Gehäuse angeordneten Kraftmesszelle, wobei der Innenraum zur Durchführung des erfindungsgemässen Verfahrens mindestens einen Sensor aufweist;
Figur 2 in schematischer Darstellung eine Kraftmessvorrichtung in Gestalt eines Tanklast- Wägemoduls im Schnitt mit einem einen Innenraum aufweisenden Gehäuse und einer im Gehäuse angeordneten Kraftmesszelle, wobei der Innenraum zur Durchführung des erfindungsgemässen Verfahrens zwei Sensoren aufweist welche über Verbindungseinrichtungen mit einer, ausserhalb des Gehäuse angeordneten Ausgabeeinheit verbunden sind;
Figur 3 den Signalverlauf eines im Innenraum des Gehäuses angeordneten Feuchtesensors, wobei in 3a der Signalverlauf, in 3b die aufsummierten Belastungen und in 3c die durch den Signalverlauf generierten Ausgabesignale beziehungsweise Ausgabemeldungen dargestellt sind,
Figur 4 den Signalverlauf eines im Innenraum des Gehäuses angeordneten Temperatursensors, wobei in 4a der Signalverlauf und in 4 b die durch den Signalverlauf generierten Ausgabesignale beziehungsweise Ausgabemeldungen dargestellt sind,
Figur 5 den Signalverlauf des Wägesignals der Kraftmesszelle, wobei in 5a der Signalverlauf, in 5b die aufsummierten Belastungen und in 5c die durch den Signalverlauf generierten Ausgabesignale beziehungsweise Ausgabemeldungen dargestellt sind.

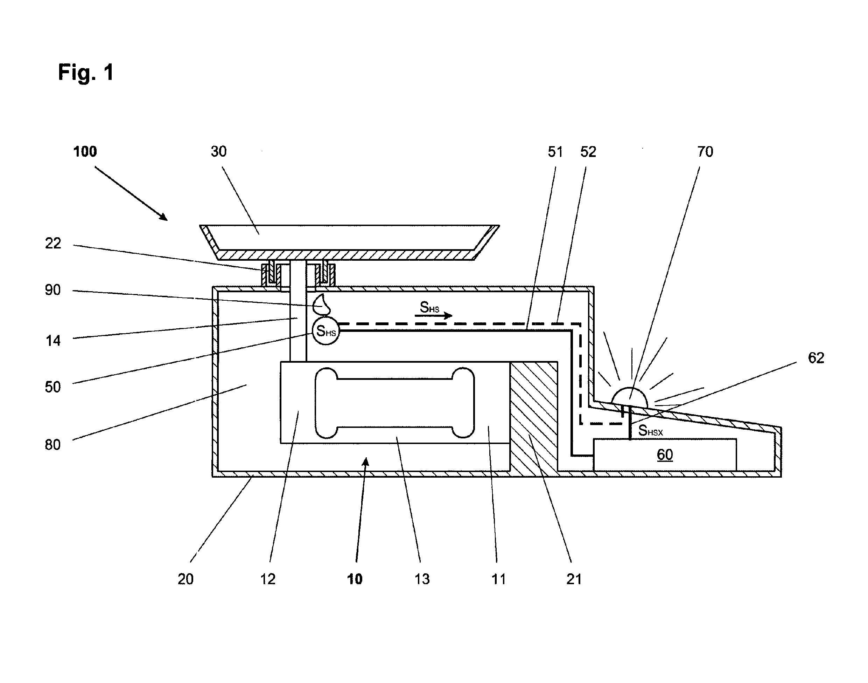

Die Figur 1 zeigt in schematischer Darstellung eine Kraftmessvorrichtung 100 beziehungsweise eine Waage im Schnitt. Eine Kraftmesszelle 10 weist einen feststehenden Teil 11 und einen Lastaufnahmeteil 12 auf, die durch einen Mittelteil 13 miteinander verbunden sind. Die Kraftmesszelle 10 ist im Innenraum 80 eines Gehäuses 20 angeordnet und mit ihrem feststehenden Teil 11 über den gehäusefesten Support 21 mit dem Gehäuse 20 starr verbunden. Ein ausserhalb des Gehäuses 20 angeordneter Lastaufnehmer 30 in Form einer Waagschale ist über ein Kraftübertragungsgestänge 14 mit dem im Innenraum 80 angeordneten Lastaufnahmeteil12 der Kraftmesszelle 10 verbunden. Das Kraftübertragungsgestänge 14 durchdringt das Gehäuse 20 berührungsfrei durch eine Gehäusedurchführung 22.

Die Gehäusedurchführung 22 ist derart ausgebildet, dass ein Eindringen von Schmutz, Staub und Feuchtigkeit möglichst vermieden oder zumindest stark reduziert wird. Je nach Anwendung kann der Innenraum 80 gegenüber der Umgebung der Kraftmessvorrichtung 100 zu diesem Zweck auch einen höheren Druck aufweisen. Ferner ist im Innenraum mindestens ein Sensor 50 angeordnet, welcher mindestens einen Parameter des Innenraumklimas 90 erfasst und ein dazu korrespondierendes Sensorsignal S_{HS} ermittelt. Dieses Sensorsignal S_{HS} wird zwecks weiterer Verarbeitung über eine Recheneinheit-Verbindung 51 an eine Recheneinheit 60 weitergeleitet und/oder über eine Ausgabe-Verbindung 52 an eine Ausgabe 70 weitergeleitet. Die Recheneinheit 60 ist über die Recheneinheit- Ausgabe- Verbindung 62 mit der Ausgabe 70 verbunden und übermittelt die von der Recheneinheit 60 generierten Ausgangssignale S_{HSX} an die Ausgabe 70. Diese kann entweder direkt an der Aussenseite des Gehäuses 20 angeordnet, vom Gehäuse 20 getrennt angeordnet, oder auch innerhalb des Gehäuses montiert sein, sofern die Ausbildung des Gehäuses 20 (schalldurchlässig, transparent) die Wahrnehmung der Ausgabe ermöglicht. Speziell auf die auszugebende Mitteilung oder Warnung zugeschnittene Symbole und Warnhinweise können die Übermittlung an eine Person verstärken. So ist die Verwendung allgemein bekannter Piktogramme, wie beispielsweise aus dem Strassenverkehr bekannte Signalschilder oder eigens für die entsprechende Warnung kreierte Symbole, denkbar. Mittels der Variierung der Frequenz blinkender visueller Ausgabemittel oder auch der Variierung von Lautstärke und Tonfrequenz phonetischer Ausgabemittel kann der Grad der Wichtigkeit der Warnung oder Meldung variiert werden. Jede der Verbindungen 51, 52, 62 im Ausführungsbeispiel von Figur 1 kann entweder eine Kabelverbindung wie ein Signalkabel, ein Bussystem und Dergleichen, oder eine kabellose Verbindung sein.

Sobald ein Parameter des Innenraumklimas 90, in diesem Ausführungsbeispiel die relative Feuchte, sich verändert oder den vom Hersteller definierten zulässigen Wert übersteigt, wird ein Sensorsignal S_{HS} oder ein Ausgangssignal S_{HSX} an die Ausgabe 70 übermittelt und dort entsprechend angezeigt. Dies kann ein Alarmton, eine optische Ausgabe wie ein Blinklicht oder eine, auf einem Display dargestellte Warnung oder Information sein.

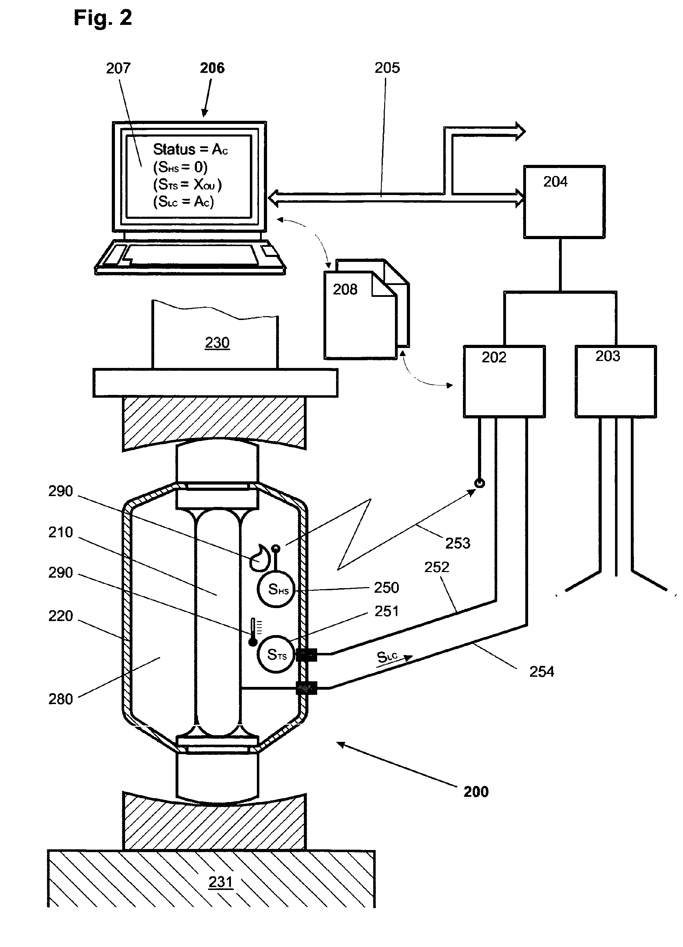

Figur 2 zeigt eine nach dem erfindungsgemässen Verfahren überwachte Kraftmessvorrichtung 200 in Form eines Tanklast- Wägemoduls. Tanklast-Wägemodule werden insbesondere in Industrieanlagen zur Verwiegung des Inhalts von Becken, Tanks, Reaktorbehältern und dergleichen verwendet. Üblicherweise werden pro zu verwiegendem Behälter mehrere Wägemodule zwischen den Füssen des Behälters 230 und dem Fundament 231 angeordnet. Dadurch steht jeder Fuss des Behälters auf einer Kraftmessvorrichtung 200. Um das Gewicht des Behälters und/oder dessen Inhalt zu ermitteln, müssen die von den Kraftmessvorrichtungen 200 erzeugten Wägesignale S_{LC} addiert werden, da es sich um die Wägesignale S_{LC} von Teilmassen handelt. Deshalb weisen die Kraftmessvorrichtungen 200 in Form von Wägemodulen in der Regel keine Ausgabe auf. Die Wägesignale S_{LC} der einzelnen Kraftmessvorrichtungen 200 eines Behälters werden beispielsweise an eine Recheneinheit 206 in Form eines Leitrechners übermittelt, dort ausgewertet und auf der im Leitrechner integrierten Ausgabe 207, meistens als Teil einer Anlageübersicht dargestellt.

Die Kraftmessvorrichtung 200 weist eine Kraftmesszelle 210 auf, welche von einem Gehäuse 220 umschlossen ist. Das Gehäuse 220 ist in der Regel mit der Kraftmesszelle 210 verschweisst und gegenüber der Umgebung der Kraftmessvorrichtung 200 dicht verschlossen. Im Messeinsatz wird sowohl die Kraftmesszelle 210 als auch das Gehäuse 220 elastisch gestaucht. Der Einfluss des Gehäusewiderstandes auf das Wägesignal S_{LC} ist teilweise kompensierbar und die Hysterese des Wägemoduls bezogen auf den Messbereich vernachlässigbar. Die Parameter des Innenraumklimas 290 werden mittels Sensoren 250, 251 detektiert und/oder gemessen. Diese Sensoren 250, 251 sind über Anschluss-Verbindungen 252 und/oder Funkverbindungen 253, Transmitter 202, Messumformer 203, einen Segmentkoppler 204 und ein Bussystem 205 mit einer Recheneinheit 206 verbunden. Das Wägesignal S_{LC} der Kraftmesszelle 210 kann entweder über diese Verbindungen oder über eine eigene Wägesignal- Verbindung 254 an die Recheneinheit 206 übertragen werden.

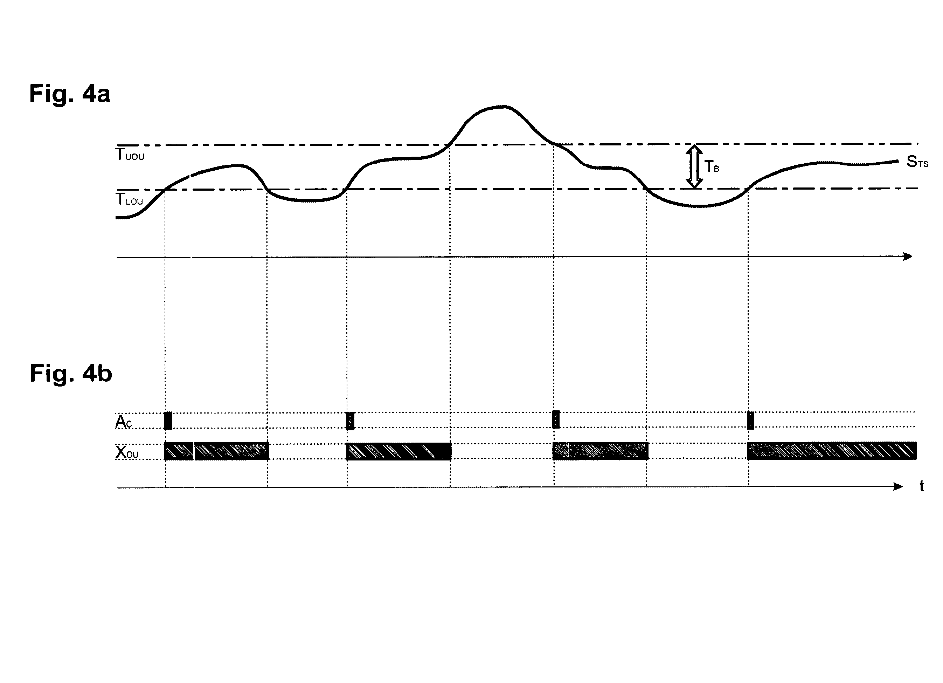

In Figur 2 weist die Kraftmessvorrichtung 200 im Innenraum des Gehäuses 280 einen Temperatursensor 251 und einen Feuchtesensor 250 auf. Die unabhängig voneinander betreibbaren Sensoren 250, 251 haben entsprechend der Parameter des Innenraumklimas 290 Messwerte an die Recheneinheit 206 übermittelt. Die Recheneinheit 206 in Figur 2 ist beispielsweise der Leitrechner eines Prozessleitsystems. Je nach Konfiguration der Kraftmessvorrichtung 200 und der Recheneinheit 206 übermitteln die Sensoren 250, 251 selbständig kontinuierlich oder periodisch und/oder zufällig oder nach Auftreten einer Veränderung entsprechende Sensorsignale S_{HS}, S_{TS} an die Recheneinheit 206. Selbstverständlich kann die Recheneinheit 206 die Sensorsignale S_{HS}, S_{TS} auch bei den Sensoren 250, 251 kontinuierlich, periodisch oder nach dem Zufallsprinzip abrufen. Der Temperatursensor 251 hat ein Sensorsignal S_{TS} übermittelt, das in der Recheneinheit 206 mit dem oberen Benutzungsgrenzwert T_{UOU} und dem unteren Benutzungsgrenzwert T_{LOU} verglichen wird. Im vorliegenden Beispiel liegt, wie auch in Figur 4 dargestellt, das Sensorsignal S_{TS} innerhalb der Benutzungsbandbreite T_{B} und damit innerhalb des Betriebsfensters (S_{TS} = X_{OU}). Der Feuchtesensor 250 hat keine Veränderung des Parameters des Innenraumklimas 290 festgestellt (S_{HS}= 0), welche auf ein Leck im Gehäuse hinweisen würde. Hingegen hat die Analyse des Wägesignales S_{LC} ergeben, dass die Kraftmesszelle 210 kurzfristig überbeansprucht wurde und die Kraftmessvorrichtung 200 neu kalibriert werden muss. Da pro Behälter mehrere Kraftmessvorrichtungen 200 verwendet werden, können die Sensorsignale S_{TS}, S_{HS} der jeweils anderen Kraftmessvorrichtungen 200 zur Verifizierung der Sensorsignale S_{TS}, S_{HS} einer Kraftmessvorrichtung 200 herangezogen werden. Die Werte zur Verifizierung können aber auch bereits im Sensor 250, 251 oder in der Recheneinheit 206 eingespeichert sein. Diese entstammen beispielsweise aus publizierten Tabellen, deren Werte aus anderen Geräten oder aus Internetdaten stammen. So sind zum Beispiel, gültig für den entsprechenden Einsatzort der Kraftmessvorrichtung, Angaben wie Druck-, Temperatur- und Strahlungsbereiche oder Angaben über Erdbeben-Vibrationen bekannt und können zur Verifizierung der Sensorsignale verwendet werden. Sofern ein Teil der Sensorsignale S_{TS}, S_{HS} in der Recheneinheit 206 im Sinne einer Historie gespeichert werden, kann die Analyse dieser Historie zu weiteren Erkenntnissen über den Zustand sowohl der Kraftmesszellen 210 als auch der Sensoren 251, 252 dienen. Die Verifizierungswerte und Verifizierungstoleranzwerte sind abhängig vom verwendeten Sensor und werden meistens vom Hersteller des Sensors mitgeliefert. Wird während des Betriebs der Kraftmessvorrichtung beispielsweise ein Sensorsignal S_{TS}, S_{HS} vom Sensor geliefert, das aufgrund der physikalischen Gegebenheiten nicht auftreten kann, wird dies durch die Verifizierung der Sensorsignale S_{TS}, S_{HS} in der Recheneinheit 206 erkannt. Des Weiteren können die Verifizierungswerte und Verifizierungstoleranzwerte auch mit Hilfe vorangegangener Sensorsignale S_{TS}, S_{HS} oder mittels der Sensorsignale S_{TS}, S_{HS} weiterer Sensoren festgelegt und/oder angepasst werden.

Als Feuchtesensoren, Temperatursensoren, Schocksensoren Stromwandler, Spannungswandler und dergleichen können alle im Stand der Technik bekannten Sensoren eingesetzt werden die in der Lage sind, ein der zu erfassenden Veränderung oder Messgrösse entsprechendes Sensorsignal zu bilden.

Das erfindungsgemässe Verfahren kann mittels zentralisierten und/oder dezentralisierten Teilen einer Steuervorrichtung einer Anlage, beispielsweise mit der Recheneinheit 206 und/oder den Messumformern bzw. Transmittern 202, 203 durchgeführt werden, die dazu mit den entsprechenden Betriebsprogrammen 208 versehen sind. Beispielsweise kann der Zustand des Sensors 250 ausschliesslich auf der Ausgabe 207 der Recheneinheit 206 oder auf den Messumformern bzw. Transmittern 202, 203 angezeigt werden. Möglich ist jedoch auch eine Aufgabenteilung zwischen den verschiedenen Ebenen der Prozesssteuerung. Durch geeignete Massnahmen kann das erfindungsgemässe Verfahren somit auf beliebigen ein- oder mehrstufigen Anlagen mit geringem Aufwand implementiert werden. Messumformer und Transmitter 202, 203 können auch in einem mobilen Gerät eingebaut sein, mit dessen Hilfe die einzelnen Werte der Sensoren 250, 251 über Funkverbindungen 253 abgefragt werden. Dazu müssen die einzelnen Sensoren 250, 251 über einen Identifikationscode verfügen, wie dies im Stand der Technik für viele Anwendungen bekannt ist und verwendet wird.

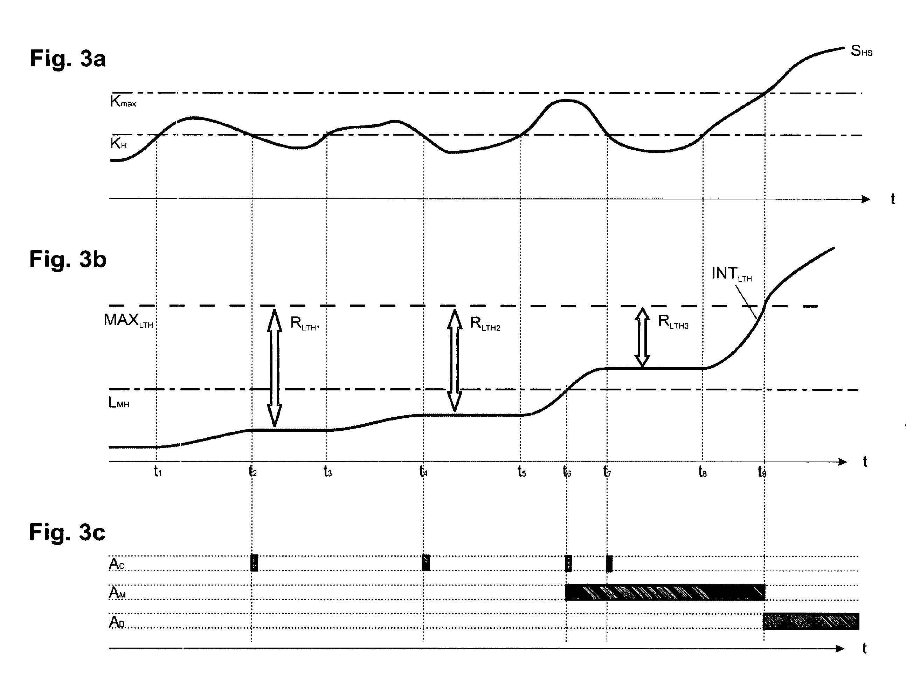

In Figur 3 ist die aus den kontinuierlich erfassten Sensorsignalen S_{HS} gebildete Verlaufskurve der relativen Feuchte des aus Figur 1 bekannten Sensors 50, und die durch die Sensorsignale S_{HS} generierten Ausgabesignale beziehungsweise Ausgabemeldungen A_{C}, AM, A_{D} dargestellt. In Figur 3a überschreitet der Sensorsignalverlauf in den Zeitpunkten t₁, t₃, t₅, t₈ einen Schwellwert K_{H}. Dieser stellt den Grenzwert dar, bei dessen Überschreitung die Feuchtigkeitskonzentration so gross ist, dass infolge von Korrosionsescheinungen an Teilen der Kraftmesszelle 10 oder der Signalverarbeitung das Wägesignal beeinflusst, und die Kraftmesszelle 10 allmählich zerstört wird. Die Grösse des Schwellwerts K_{H} hängt einerseits von den im Innenraum 80 der Kraftmessvorrichtung 100 vorhandenen Materialien, andererseits von der Aggressivität des eindringenden Mediums ab und muss vom Hersteller fallbezogen festgelegt werden. Als Schwellwerte können beispielsweise folgende Werte definiert sein:
- Vibrationsgrenzen: 0.196133 ^{m}/ₛ²
- Max./Min. Lagertemperaturgrenzen: -20°C bis +70°C
- Netzspannungsspitzen (Störung oder Zerstörung von elektrischen Komponenten)
- Belastungszyklen (Ermüdungsgrenzen)

Sobald der Schwellwert K_{H} wie in den Zeitpunkten t₂, t₄, t₇ unterschritten wird, wird der Zustand stabilisiert und die Zerstörung im Innenraum 80 der Kraftmessvorrichtung 100 schreitet nicht weiter voran. Wie in Figur 3c dargestellt ist, kann bei der Unterschreitung des Schwellwertes K_{H} eine Kalibrierung A_{C} über die Ausgabe verlangt oder automatisch eine Kalibrierung ausgelöst werden.

Ferner kann auch ein Maximalwert Kₘₐₓ definiert werden, bei dessen Überschreitung beispielsweise die Kraftmesszelle 10 und die elektronischen Komponenten innerhalb kürzester Zeit zerstört werden.

Die Überschreitungen des Schwellwertes K_{H} und des Maximalwertes Kₘₐₓ in Abhängigkeit der Überschreitungszeit (t₂- t₁; t₄- t₃; t₇-t₅;...) werden wie in Figur 3b dargestellt, als Belastungen INT_{LTH} registriert und aufsummiert. Die aufsummierten Belastungen INT_{LTH} werden mit dem durch Versuche ermittelten Lebensdauergrenzwert MAX_{LTH} verglichen und daraus die Restlebensdauer R_{LTH1}, R_{LTH2}, R_{LTH3} errechnet. Diese wird an die Ausgabe 70 übermittelt oder in der Recheneinheit gespeichert.

Wie in Figur 3b dargestellt, können noch weitere Grenzwerte definiert werden. Als Beispiel sei der Wartungsgrenzwert L_{MH} genannt, bei dessen Überschreitung ein Warnhinweis und/oder eine Wartungsaufforderung AM an die Ausgabe 70 weitergeleitet wird (Figur 3c). Des Weiteren kann bei der Überschreitung des Wartungsgrenzwertes L_{MH} im Zeitpunkt t₆ beispielsweise die Messwertausgabe der Kraftmesszelle blockiert, die Genauigkeitsklasse der Waage heruntergestuft, Messwertausdrucke mit Warnhinweisen versehen und/oder über Internetverbindungen der Hersteller automatisch informiert werden. Diese Aufzählung soll nicht als abschliessend verstanden werden, da in diesem Zusammenhang noch viele weitere Aktionen und Ausprägungen der Ausgabe möglich sind.

Sobald die Belastungen INT_{LTH} den Lebensdauergrenzwert MAX_{LTH} überschreiten, wird wie in Figur 3c dargestellt, ein entsprechender Signalwert A_{D} an die Ausgabe übermittelt, welcher die wahrscheinlich endgültige innere Zerstörung der Kraftmessvorrichtung anzeigt. Der Signalwert A_{D} blockiert sinnvollerweise auch die Ausgabe, so dass der weitere Einsatz der Kraftmessvorrichtung verhindert wird.

In Figur 4 ist eine aus den kontinuierlich erfassten Sensorsignalen S_{TS} gebildete Temperaturverlaufkurve eines im Innenraum des Gehäuses angeordneten Temperatursensors, sowie die durch die Sensorsignale S_{TS} in der Recheneinheit generierten Ausgabesignale beziehungsweise Ausgabemeldungen A_{C}, X_{OU} dargestellt. Der Temperaturverlauf in Figur 4a unterschreitet teilweise einen unteren Benutzungsgrenzwert T_{LOU} und überschreitet teilweise einen oberen Benutungsgrenzwert T_{UOU}. Anders als bei der in Figur 3 dargestellten Verlaufskurve der relativen Feuchte, führt im vorliegenden Ausführungsbeispiel eine Verletzung der Grenzwerte T_{LOU,} T_{UOU} nicht zur Zerstörung der Kraftmesszelle. Die Überprüfung einer Grenzwertverletzung findet entweder in der Recheneinheit oder im Sensor selbst statt. Sobald die Sensorsignale S_{TS} innerhalb der durch die Benutzungsgrenzwerte definierte Bandbreite T_{B} ist, wird an die Ausgabe beispielsweise ein entsprechendes Signal S_{TS} = X_{OU} übermittelt, wie dies in Figur 4b dargestellt ist. Je nach Konfiguration kann dieses Signal eine Freischaltung des Messvorganges bewirken, so dass ein Verwiegen mittels der Kraftmesszelle möglich wird. Zudem kann beim Eintritt der Temperaturverlaufskurve in die definierte Bandbreite T_{B}, eine Kalibrierung A_{C} automatisch ausgelöst oder vom Benutzer verlangt werden.

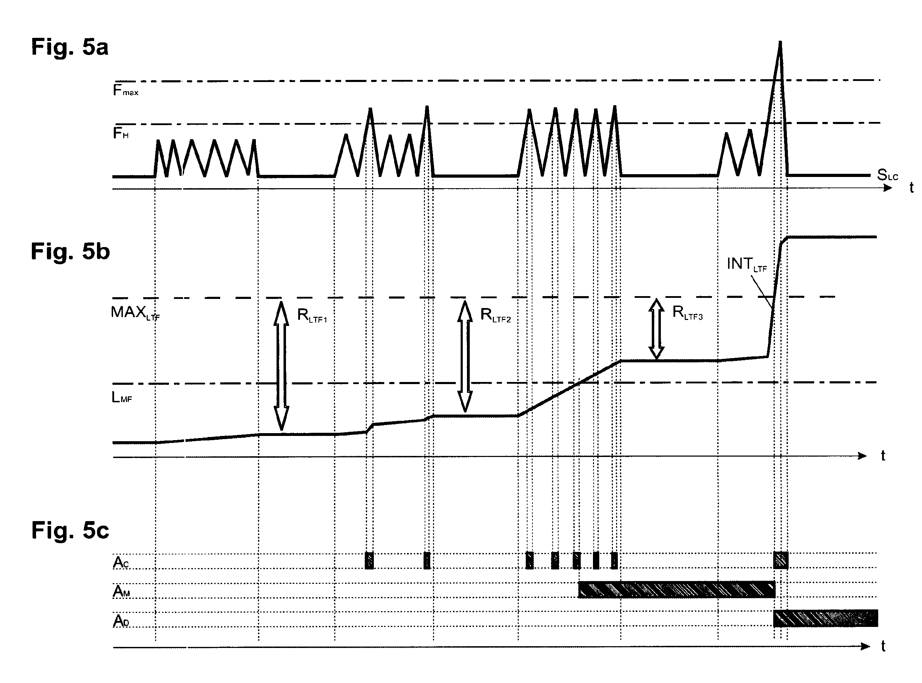

In Figur 5 ist die aus den kontinuierlich erfassten Wägesignalen S_{LC} gebildete Verlaufskurve der mechanischen Belastungen der Kraftmesszelle und die durch die Wägesignale S_{LC} generierten Ausgabesignale beziehungsweise Ausgabemeldungen A_{C,} A_{M}, A_{D} dargestellt. In Figur 5a überschreitet der Wägesignalverlauf mehrere Male einen Schwellwert F_{H}. Dieser stellt den Grenzwert dar, bei dessen Überschreitung die mechanische Belastung so gross ist, dass infolge von plastischen Deformationen an Teilen der Kraftmesszelle 10 das Wägesignal S_{LC} beeinflusst, und die Kraftmesszelle 10 allmählich zerstört wird. Die Grösse des Schwellwerts F_{H} hängt von den in der Kraftmesszelle 10 verwendeten Materialien ab und muss vom Hersteller fallbezogen festgelegt werden.

Wenn das Wägesignal S_{LC} unterhalb des Schwellwerts F_{H} liegt, werden die Materialien im elastischen Bereich beansprucht, was die Kraftmesszelle nicht zerstört. Wie in Figur 5c dargestellt ist, kann bei der Überschreitung des Schwellwertes F_{H} eine Kalibrierung A_{C} über die Ausgabe verlangt oder automatisch eine Kalibrierung ausgelöst werden.

Ferner kann auch ein Maximalwert Fₘₐₓ definiert werden, bei dessen Überschreitung davon ausgegangen werden kann, dass die Kraftmesszelle 10 durch eine entsprechend hohe, mechanische Belastung zerstört worden sind.

Die Überschreitungen des Schwellwertes F_{H} und des Maximalwertes Fₘₐₓ werden wie in Figur 5b dargestellt, als Belastungen INT_{LTF} registriert und aufsummiert. Die aufsummierten Belastungen INT_{LTF} werden mit dem durch Versuche ermittelten Lebensdauergrenzwert MAX_{LTF} verglichen und daraus die Restlebensdauer R_{LTF1}, R_{LTF2}, R_{LTF3} errechnet. Diese wird an die Ausgabe 70 übermittelt oder in der Recheneinheit gespeichert.

Wie in Figur 5b dargestellt, können noch weitere Grenzwerte definiert werden. Als Beispiel sei der Wartungsgrenzwert L_{MF} genannt, bei dessen Überschreitung ein Warnhinweis und/oder eine Wartungsaufforderung AM an die Ausgabe 70 weitergeleitet wird (Figur 5c). Des Weiteren kann bei der Überschreitung des Wartungsgrenzwertes L_{MF} wie in Figur 3b beschrieben, beispielsweise die Messwertausgabe der Kraftmesszelle blockiert, die Genauigkeitsklasse der Waage heruntergestuft, Messwertausdrucke mit Warnhinweisen versehen und/oder über Internetverbindungen der Hersteller automatisch informiert werden.

Sobald die Belastungen INT_{LTF} den Lebensdauergrenzwert MAX_{LTF} überschreiten, wird wie in Figur 5c dargestellt, ein entsprechender Signalwert A_{D} an die Ausgabe übermittelt, welcher die wahrscheinlich endgültige innere Zerstörung der Kraftmessvorrichtung anzeigt. Der Signalwert A_{D} blockiert sinnvollerweise auch die Ausgabe, so dass der weitere Einsatz der Kraftmessvorrichtung verhindert wird.

Die vorliegende Erfindung birgt noch weitere Vorteile, welche nur indirekt die Zustandserfassung und Lebensdauerberechnung betreffen. Bei hermetisch gekapselten Kraftmessvorrichtungen kann beispielsweise durch einen Vergleich der Sensorsignale eines installierten Feuchtesensors bei der Auslieferung und nach der Installation beim Kunden sogar festgestellt werden, ob die Kraftmessvorrichtung während des Transports geöffnet worden ist oder nicht. Dieser Aspekt ist insbesondere bei eichfähigen Kraftmessvorrichtungen von grosser Bedeutung und stellt eine zusätzliche Sicherheit zum Siegel dar.

Zudem können geeignete, von dem mindestens einen Sensor generierte Sensorsignale auch zur Korrektur des Messergebnisses herangezogen werden, um die Anordnung zusätzlicher Messfühler zu vermeiden, wie sie beispielsweise im Stand der Technik zur Kompensation von Hysterese- und/oder Drifterscheinungen verwendet werden.

Die Ausführungsbeispiele in der Beschreibung sollen nicht dahingehend verstanden werden, dass die vorliegende Erfindung auf die Anordnung von nur einer Zelle in nur einem Gehäuse limitiert ist. Es liegt im Verständnis des Fachmannes, die Erfindung ebenso in Anordnungen anzuwenden, die mindestens zwei Wägezellen in einem Gehäuse beinhalten. Des Weiteren spielt die Koordination von Messungen und Warnungen im Bezug auf den Erfindungsgegenstand keine Rolle. Sowohl Meldungen / Warnungen in "Echtzeit" als auch Meldungen / Warnungen zeitlich zu den Messungen versetzt sind möglich.

### Bezugszeichenliste

- 210, 10: Kraftmesszelle
- 11: feststehender Teil
- 12: Lastaufnahmeteil
- 13: Mittelteil
- 14: Kraftübertragungsgestänge
- 220, 20: Gehäuse
- 21: gehäusefester Support
- 22: Gehäusedurchführung
- 30: Lastaufnehmer
- 50: Sensor
- 51: Recheneinheit- Verbindung
- 52: Ausgabe- Verbindung
- 60: Recheneinheit
- 62: Recheneinheit- Ausgabe- Verbindung
- 70: Ausgabe
- 280, 80: Innenraum
- 290, 90: Parameter des Innenraumklimas
- 200, 100: Kraftmessvorrichtung
- 202: Transmitter
- 203: Messumformer
- 204: Segmentkoppler
- 205: Bussystem
- 206: Recheneinheit / Leitrechner
- 207: Ausgabe / LeitrechnerAusgabe
- 208: Betriebsprogramm
- 230: Behälterfuss
- 231: Fundament
- 250: Feuchtesensor
- 251: Temperatursensor
- 252: Anschluss- Verbindung
- 253: Funk- Verbindung
- 254: Wägesignal- Verbindung

## Patentansprüche

1. Verfahren zur Überwachung und/oder zur Bestimmung des Zustandes einer Kraftmessvorrichtung (100, 200) mit mindestens einem, einen Innenraum (80, 280) aufweisenden Gehäuse (20, 220) und mit mindestens einer im Innenraum (80, 280) des mindestens einen Gehäuses (20, 220) eingebauten Kraftmesszelle (10, 210), wobei durch mindestens einen im Innenraum (80, 280) des Gehäuses (20, 220) und/oder mindestens einen, am Gehäuse (20, 220) angeordneten Sensor (50, 250, 251) mindestens ein die Lebensdauer der Kraftmesszelle (10, 210) beeinflussender Parameter des Innenraumklimas (90, 290) gemessen wird und ein dem gemessenen Parameter des Innenraumklimas (90, 290) entsprechendes Sensorsignal (S_{HS}, S_{TS}) an eine Recheneinheit (60, 206) und/oder an eine Ausgabe (70, 207) übermittelt wird, **dadurch gekennzeichnet, dass** das ermittelte Sensorsignal (S_{HS}, S_{TS}, S_{LC}) in der Recheneinheit (60, 206) mit wenigstens einem Schwellwert (K_{H}, F_{H}) verglichen wird und nach Überschreiten dieses Schwellwerts (K_{H}, F_{H}) eine entsprechende Belastung registriert und die Summe aller Belastungen (INT_{LTF}, INT_{LTH}) berechnet und durch Vergleich mit einem Maximalwert (MAX_{LTF}, MAX_{LTH}) der zulässigen Belastungen eine zulässige Restlebensdauer (R_{LTH}, R_{LTF}) bis zur wahrscheinlich endgültigen inneren Zerstörung der Kraftmessvorrichtung (100, 200) berechnet wird.

2. Verfahren nach Anspruch 1, **dadurch gekennzeichnet, dass** durch den mindestens einen Sensor (50, 250, 251) oder durch einen zusätzlichen Sensor (50, 250, 251) mindestens ein, das Wägesignal (S_{LC}) der Kraftmessvorrichtung (100, 200) beeinflussender Parameter des Innenraumklimas (90, 290) gemessen wird, ein dem gemessenen Parameter des Innenraumklimas (90, 290) entsprechendes Sensorsignal (S_{TS}) in der Recheneinheit (60, 260) mit einem oberen Benutzungsgrenzwert (T_{UOU}) und/oder einem unteren Benutzungsgrenzwert (T_{LOU}) verglichen wird und bei Verletzung eines dieser Benutzungsgrenzwerte (Tuou, T_{LOU}) das Sensorsignal (S_{TS}) oder ein Ausgangssignal (S_{HSX}) der Recheneinheit (60, 260) an eine Ausgabe (70, 207) übermittelt wird.

3. Verfahren nach Anspruch 1 oder 2, **dadurch gekennzeichnet, dass** durch den mindestens einen Sensor (50, 250, 251) kontinuierlich oder periodisch und/oder zufällig ein Sensorsignal (S_{HS}, S_{TS}) mindestens eines, die Lebensdauer der Kraftmesszelle (10, 210) und/oder das Wägesignal (S_{LC}) beeinflussenden Parameters des Innenraumklimas (90, 290) ermittelt wird.

4. Verfahren nach einem der Ansprüche 1 bis 3, **dadurch gekennzeichnet, dass** durch den mindestens einen Sensor (50, 250, 251) die Veränderung mindestens eines, die Lebensdauer der Kraftmesszelle (10, 210) und/oder das Wägesignal (S_{LC}) beeinflussenden Parameters des Innenraumklimas (90, 290) detektiert, und ein dieser Veränderung entsprechendes Sensorsignal (S_{HS}, S_{TS}) ermittelt wird.

5. Verfahren nach Anspruch 1, **dadurch gekennzeichnet, dass** die Summe aller Belastungen (INT_{LTF}, INT_{LTH}), die auf die Kraftmessvorrichtung (100, 200) einwirken, durch Integration
a) des gesamten Verlaufs der Sensorsignale (S_{HS}, S_{TS}, S_{LC}) oder
b) des Verlaufs der Sensorsignale (S_{HS}, S_{TS}, S_{LC}) nach Überschreiten eines Schwellwerts (K_{H}, F_{H}) oder
c) der Zeitabschnitte ((t₂-t₁), (t₄-t₃), (t₇-t₅)), während derer die Sensorsignale (S_{HS}, S_{TS}, S_{LC}) über dem bzw. den Schwellwerten (K_{H}, F_{H}) liegen,
bestimmt wird und dass nach Überschreiten des Maximalwerts (MAX_{LTF}, MAX_{LTH}) der Zustand der Kraftmessvorrichtung (100. 200) beziehungsweise das Überschreiten des Maximalwerts (MAX_{LTF}, MAX_{LTH}) an die Ausgabe übermittelt wird.

6. Verfahren nach einem der Ansprüche 1 bis 5, **dadurch gekennzeichnet, dass** das der Ausgabe (70, 207) zugeführte Sensorsignal (S_{HS}, S_{TS}, S_{LC}) oder das Ausgangssignal der Recheneinheit (S_{HSX}) eine Alarmierung auslöst und/oder einen Messvorgang unterbricht und/oder eine Bereitschaftsanzeige löscht.

7. Verfahren nach einem der Ansprüche 5 oder 6, **dadurch gekennzeichnet, dass** das mindestens eine Sensorsignal (S_{HS}, S_{TS}, S_{LC}) oder das Ausgangssignal der Recheneinheit (S_{HSX}) einen automatischen Kalibriervorgang (Ac) der Kraftmesszelle (10, 210) auslöst oder vom Benutzer/Hersteller eine manuell durchgeführte Kalibrierung (A_{C}) verlangt.

8. Verfahren nach einem der Ansprüche 1 bis 7, **dadurch gekennzeichnet, dass** zur Kontrolle des mindestens einen Sensors (50, 250, 251) dessen an die Recheneinheit (60, 206) übermittelten Sensorsignale (S_{HS}, S_{TS}, S_{LC}) zumindest periodisch in der Recheneinheit (60, 206) durch einen Vergleich mit in der Recheneinheit (60, 206) gespeicherten Verifizierungswerten und Verifizierungstoleranzwerten überprüft wird und bei Abweichung von diesen Verifizierungswerten oder beim Verletzen der Verifizierungstoleranzwerte ein Fehler registriert und an die Ausgabe (70, 207) übermittelt wird.

9. Verfahren nach einem der Ansprüche 1 bis 8, **dadurch gekennzeichnet, dass** mindestens ein Sensorsignal (S_{HS}, S_{TS}, S_{LC}) vor der Auslieferung der Kraftmessvorrichtung (100, 200) ermittelt wird, dieses Sensorsignal (S_{HS}, S_{TS}, S_{LC}) in der Recheneinheit als Referenzwert gespeichert wird, und dass zumindest nach der Auslieferung der Kraftmesszelle mit dem, dem Referenzwert zugeordneten Sensor (50, 250, 251) mindestens ein Sensorsignal (S_{HS}, S_{TS}, S_{LC}) ermittelt wird und dieses Sensorsignal (S_{HS}, S_{TS}, S_{LC}) mit dem Referenzwert verglichen wird.

10. Kraftmessvorrichtung (100, 200), geeignet zur Durchführung des Verfahrens nach einem der Ansprüche 1 bis 9 mit mindestens einem einen Innenraum (80, 280) aufweisenden Gehäuse (20, 220), mindestens einer im Innenraum (80, 280) eingebauten Kraftmesszelle (10, 210) und mit mindestens einem im Innenraum (80, 280) des Gehäuses (20, 220) und/oder mindestens einem, am Gehäuse (20, 220) angeordneten Sensor (50, 250, 251), **dadurch gekennzeichnet, dass** eine Recheneinheit vorhanden ist, die geeignet ist, das ermittelte Sensorsignal (S_{HS}, S_{TS}, S_{LC}) in der Recheneinheit (60, 206) mit wenigstens einem Schwellwert (K_{H}, F_{H}) zu vergleichen und nach über- schreiten dieses Schwellwerts (K_{H}, F_{H}) eine entsprechende Belastung zu registrieren und die Summe aller Belastungen (INT_{LTF}, INT_{LTH}) zu berechnen und durch Vergleich mit einem Maximalwert (MAX_{LTF}, MAX_{LTH}) der zulässigen Belastungen eine zulässige Restlebens- dauer (R_{LTH}, R_{LTF}) bis zur wahrscheinlich endgültigen inneren Zerstärung der Kraftmessvorrichtung (100, 200) zu berechnen, wobei
a) der mindestens eine Sensor (50, 250, 251) ein Triggerelement aufweist, wobei mindestens ein Schwellwert (K_{H}, F_{H}) und/oder mindestens ein Benutzungsgrenzwert (T_{UOU}, T_{LOU}) mindestens eines, die Lebensdauer der Kraftmesszelle (10, 210) beeinflussenden Parameters des Innenraumklimas (90, 290) im Triggerelement abgebildet ist und/oder
b) der Kraftmessvorrichtung (100, 200) mindestens eine die Ausgabe (70, 207) enthaltende Ausgabeeinheit und/oder ein Messumformer (203, 204, 205) und ein die Funktion eines Triggerns ausführendes Betriebsprogramm (208) zugeordnet sind,
b1) wobei das Betriebsprogramm (208) mindestens einen Wert aufweist, welcher einen Schwellwert (K_{H}, F_{H}) und/oder einen Benutzungsgrenzwert (T_{UOU}, T_{LOU}) mindestens eines, die Lebensdauer der Kraftmesszelle (10, 210) beeinflussenden Parameters des Innenraumklimas (90, 290) repräsentiert und/oder
b2) eine Befehlssequenz zum Abfragen mindestens eines Wertes aus einem Speichermodul vorhanden ist, welcher mindestens einen Schwellwert und/oder einen Benutzungsgrenzwert und/oder ein en Maximalwert repräsentiert.

11. Kraftmessvorrichtung (100, 200) nach Anspruch 10, **dadurch gekennzeichnet, dass** ein durch das Triggerelement getriggertes Sensorsignal (S_{HS}, S_{TS}) an eine Recheneinheit (60, 206) und/oder an eine Ausgabe (70, 207) übermittelbar ist.

12. Kraftmessvorrichtung (100, 200) nach einem der Ansprüche 10 oder 11, **dadurch gekennzeichnet, dass** ein durch das Betriebsprogramm (208) getriggertes Ausgangssignal der Recheneinheit (S_{HSX}) an eine Ausgabe (70, 207) und/oder an eine weitere Recheneinheit (60, 206) übermittelbar ist.

13. Kraftmessvorrichtung (100, 200) nach einem der Ansprüche 10 bis 12, **dadurch gekennzeichnet, dass** die Recheneinheit (60, 206) und/oder eine, die Ausgabe (70, 207) enthaltende Ausgabeeinheit drahtlos oder drahtgebunden mit dem mindestens einen Sensor (50, 250, 251) verbunden sind.

14. Kraftmessvorrichtung (100, 200) nach einem der Ansprüche 10 bis 13, **dadurch gekennzeichnet, dass** mindestens ein Sensor (50, 250, 251) vorgesehen ist, in den ein Speichermodul und/oder ein Messumformer integriert ist.

15. Kraftmessvorrichtung (100, 200) nach einem der Ansprüche 10 bis 14, **dadurch gekennzeichnet, dass** der mindestens eine Sensor (50, 250) ein Feuchtesensor (50, 250), ein Drucksensor oder ein Temperatursensor (251) ist.

16. Kraftmessvorrichtung (100, 200) nach einem der Ansprüche 10 bis 15, **dadurch gekennzeichnet, dass** zusätzlich zum mindestens einen Sensor (50, 250, 251 ) ein weiterer Sensor im Innenraum (80, 280) des Gehäuses (20, 220) oder am Gehäuse (20,220) zur Detektierung von Netzspannungsspitzen in einer die Kraftmesszelle (10, 210) speisenden Stromversorgung angeordnet ist.

17. Kraftmessvorrichtung (100, 200) nach einem der Ansprüche 10 bis 16, **dadurch gekennzeichnet, dass** zusätzlich zum mindestens einen Sensor (50, 250, 251) mindestens ein weiterer Sensor im Innenraum (80, 280) des Gehäuses (20, 220) oder am Gehäuse (20,220) zur Detektierung von radioaktiver Bestrahlung und/oder von Schallwellen und/oder von Schlägen angeordnet ist.

18. Kraftmessvorrichtung (100, 200) nach einem der Ansprüche 10 bis 17, **dadurch gekennzeichnet, dass** im Innenraum (80, 280) des Gehäuses (20, 220) oder am Gehäuse (20,220) zusätzlich zum mindestens einen Sensor (50, 250, 251) ein weiterer Sensor zur Ermittlung eines Sensorsignals (S_{LC}) in Abhängigkeit der Belastungszyklen der Kraftmesszelle (10, 210) angeordnet ist.

19. Kraftmessvorrichtung (100, 200) nach einem der Ansprüche 10 bis 18, **dadurch gekennzeichnet, dass** direkt aus dem Wägesignal der Kraftmesszelle (10, 210) ein Sensorsignal (S_{LC}) in Abhängigkeit der Belastungszyklen ermittelbar ist.

## Claims

1. Method of monitoring and/or determining the condition of a force-measuring device (100, 200) with at least one housing (20, 220) comprising an interior space (80, 280) and with at least one force-measuring cell (10, 210) installed in the interior space (80, 280) of the at least one housing (20, 220), wherein at least one parameter (90, 290) of the internal atmosphere affecting the operating life of the force-measuring cell (10, 210) is measured by at least one sensor (50, 250, 251) arranged in the interior space (80, 280) of the housing (20, 220) and/or on the housing (20, 220), and wherein a sensor signal (S_{HS}, S_{TS}) representing the measured parameter (90, 290) of the internal atmosphere is transmitted to a computer unit (60, 206) and/or to an output device (70, 207), **characterized in that** the sensor signal (S_{HS}, S_{TS}, S_{LC}) is compared in the computer unit (60, 206) to at least one threshold value (K_{H}, F_{H}) and that after the threshold value (K_{H}, F_{H}) has been exceeded, a corresponding stress load is registered, that the sum of all stress loads (INT_{LTF}, INT_{LTH}) is calculated and compared to a respective maximum permissible value (MAX_{LTF}, MAX_{LTH}) of the stress loads, and that based on this comparison, a permissible remaining operating life (R_{LTH}, R_{LTF}) up to the probably final internal breakdown of the force-measuring device (100, 200) is calculated.

2. Method according to claim 1, **characterized in that** at least one parameter (90, 290) of the internal atmosphere affecting the weighing signal (S_{LC}) of the force-measuring cell (10, 210) is measured by the at least one sensor (50, 250, 251) or by an additional sensor (50, 250, 251), that a sensor signal (S_{TS}) representing the measured parameter (90, 290) of the internal atmosphere is compared in the computer unit (60, 206) to an upper operating limit (T_{UOU}) and/or to a lower operating limit (T_{LOU}), and that if one of the operating limits (T_{UOU}, T_{LOU}) has been violated, the sensor signal (S_{TS}) or an output signal (S_{HSX}) of the computer unit (60, 206) is transmitted to an output device (70, 207).

3. Method according to claim 1 or 2, **characterized in that** a sensor signal (S_{HS}, S_{TS}) representing at least one parameter (90, 290) of the internal atmosphere affecting the operating life of the force-measuring cell (10, 210) and/or the weighing signal (S_{LC}) is determined either continuously or periodically and/or at random intervals by the at least one sensor (50, 250, 251).

4. Method according to one of the claims 1 to 3, **characterized in that** a change of at least one parameter (90, 290) of the internal atmosphere affecting the operating life of the force-measuring cell (10, 210) and/or the weighing signal (S_{LC}) is determined by the at least one sensor (50, 250, 251), and that a sensor signal (S_{HS}, S_{TS}) is determined representing said change.

5. Method according to claim 1, **characterized in that** the sum of all stress loads (INT_{LTF}, INT_{LTH}) affecting the force-measuring device (100, 200) is determined by integration of
a) the entire time profile of the sensor signals (S_{HS}, S_{TS}, S_{LC}), or
b) the time profile of the sensor signals (S_{HS}, S_{TS}, S_{LC}) after a threshold value (K_{H}, F_{H}) has been exceeded, or
c) the time intervals ((t2-t1), (t4-t3), (t7-t5)) during which the sensor signals (S_{HS}, S_{TS}, S_{LC}) are exceeding one or both of the threshold values (K_{H}, F_{H}),
and that after the maximum permissible value (MAX_{LTF}, MAX_{LTH}) has been exceeded, the condition of the force-measuring device (100, 200), specifically the fact that the maximum permissible value (MAX_{LTF}, MAX_{LTH}) has been exceeded, is transmitted to the output device.

6. Method according to one of the claims 1 to 5, **characterized in that** the sensor signal (S_{HS}, S_{TS}, S_{LC}) transmitted to the output device (70, 207) or the output signal (S_{HSX}) of the computer unit triggers an alarm and/or interrupts a measurement process and/or turns off an operational readiness indicator.

7. Method according to one of the claims 5 or 6, **characterized in that** the at least one sensor signal (S_{HS}, S_{TS}, S_{LC}) or the output signal (S_{HSX}) of the computer unit triggers an automatic calibration cycle (A_{C}) of the force-measuring cell (10, 210) or indicates that the user or the manufacturer needs to perform a manual calibration (A_{C}).

8. Method according to one of the claims 1 to 7, **characterized in that**, for the purpose of checking the at least one sensor (50, 250, 251), the sensor signals (S_{HS}, S_{TS}, S_{LC}) transmitted from the latter to the computer unit (60, 206) are checked in the computer unit (60, 206) at least periodically by comparing them to verification values and verification tolerance values stored in the computer unit (60, 206) and that, if the comparison indicates a deviation from the verification values or a violation of verification tolerance values, an error is registered and transmitted to the output device (70, 207).

9. Method according to one of the claims 1 to 8, **characterized in that** at least one sensor signal (S_{HS}, S_{TS}, S_{LC}) is determined prior to delivery of the force-measuring device (100, 200), that said sensor signal (S_{HS}, S_{TS}, S_{LC}) is stored in the computer unit as a reference value and that, at least after the delivery of the force-measuring cell, at least one sensor signal (S_{HS}, S_{TS}, S_{LC}) is determined using the sensor (50, 250, 251) associated with the reference value, and that the latter sensor signal (S_{HS}, S_{TS}, S_{LC}) is compared to the reference value.

10. Force-measuring device (100, 200), operable to carry out the method according to one of the claims 1 to 9, with at least one housing (20, 220) comprising an interior space (80, 280), further with at least one force-measuring cell (10, 210) installed in the interior space (80, 280) of the at least one housing (20, 220), and with at least one sensor (50, 250, 251) arranged in the interior space (80, 280) of the housing (20, 220) and/or on the housing (20, 220), **characterized in that** a computer unit is provided which is operable to compare the sensor signal (S_{HS}, S_{TS}, S_{LC}) to at least one threshold value (K_{H}, F_{H}) and, after the threshold value (K_{H}, F_{H}) has been exceeded, to register a corresponding stress load, to calculate the sum of all stress loads (INT_{LTF}, INT_{LTH}) to compare said sum to a respective maximum permissible value (MAX_{LTF}, MAX_{LTH}) of the stress loads, and to calculate, based on said comparison, a permissible remaining operating life (R_{LTH}, R_{LTF}) up to the probably final internal breakdown of the force-measuring device (100, 200), wherein
a) the at least one sensor (50, 250, 251) comprises a trigger element, wherein at least one threshold value (K_{H}, F_{H}) and/or at least one operating limit (T_{UOU}, T_{LOU}) of at least one parameter (90, 290) of the internal atmosphere affecting the operating life of the force-measuring cell (10, 210) is reflected in the trigger element, and/or
b) at least one output unit comprising the output device (70, 207) and/or a measurement converter (203, 204, 205) and an operating program (208) performing the function of issuing a trigger signal are functionally assigned to the force-measuring device (100, 200),
b1) wherein the operating program (208) contains at least one value representing at least one threshold value (K_{H}, F_{H}) and/or at least one operating limit (T_{UOU}, T_{LOU}) of at least one parameter (90, 290) of the internal atmosphere affecting the operating life of the force-measuring cell (10, 210), and/or
b2) wherein a sequence of commands serves to acquire from a memory module at least one value representing a threshold value and/or an operating limit and/or a maximum permissible value.

11. Force-measuring device (100, 200) according to claim 10, **characterized in that** a sensor signal (S_{HS}, S_{TS}) triggered by the trigger element can be transmitted to a computer unit (60, 206) and/or to an output device (70, 207).

12. Force-measuring device (100, 200) according to one of the claims 10 or 11, **characterized in that** an output signal (S_{HX}) of the computer unit triggered by the operating program (208) can be transmitted to an output device (70, 207) and/or to a further computer unit (60, 206) .

13. Force-measuring device (100, 200) according to one of the claims 10 to 12 **characterized in that** the computer unit (60, 206) and/or an output unit comprising the output device (70, 207) are connected to the at least one sensor (50, 250, 251) through a wireless or wire- bound connection.

14. Force-measuring device (100, 200) according to one of the claims 10 to 13 **characterized in that** at least one sensor (50, 250, 251) is provided in which a memory module and/or a measurement converter is incorporated.

15. Force-measuring device (100, 200) according to one of the claims 10 to 14 **characterized in that** the at least one sensor (50, 250) is a humidity sensor (50, 250), a pressure sensor or a temperature sensor (251).

16. Force-measuring device (100, 200) according to one of the claims 10 to 15 **characterized in that** in addition to the at least one sensor (50, 250, 251), there is a further sensor arranged in the interior space (80, 280) of the housing (20, 220) or on the housing (20, 220) for the detection of line power peaks in a power supply feeding the force-measuring cell (10, 210).

17. Force-measuring device (100, 200) according to one of the claims 10 to 16, **characterized in that** in addition to the at least one sensor (50, 250, 251), at least one further sensor is arranged in the interior space (80, 280) of the housing (20, 220) or on the housing for the detection of radioactive radiation and/or sound waves and/or impacts.

18. Force-measuring device (100, 200) according to one of the claims 10 to 17, **characterized in that** in addition to the at least one sensor (50, 250, 251), at least one further sensor is arranged in the interior space (80, 280) of the housing (20, 220) or on the housing to determine a sensor signal (S_{LC}) dependent on the load cycles of the force-measuring cell (10, 210).

19. Force-measuring device (100, 200) according to one of the claims 10 to 18, **characterized in that** a sensor signal (S_{LC}) dependent on the load cycles can be determined directly from the weighing signal of the force-measuring cell (10, 210).

## Revendications

1. Procédé destiné à contrôler et/ou déterminer l'état d'un dispositif de mesure de force (100, 200) comprenant au moins un boîtier (20, 220) présentant un espace intérieur (80, 280) et au moins une cellule de mesure de force (10, 210) intégrée dans l'espace intérieur (80, 280) du au moins un boîtier (20, 220), au moins un paramètre, influençant la durée de vie de la cellule de mesure de force (10, 210), du climat de l'espace intérieur (90, 290) étant mesuré par au moins un capteur (50, 250, 251) disposé dans l'espace intérieur (80, 280) du boîtier (20, 220) et/ou au moins un capteur (50, 250, 251) disposé sur le boîtier (20,220) et un signal de capteur (S_{HS}, S_{TS}) correspondant au paramètre mesuré du climat de l'espace intérieur (90, 290) étant transmis à une unité de calcul (60, 206) et/ou à une sortie (70, 207), **caractérisé en ce que** le signal de capteur (S_{HS}, S_{TS}, S_{LC}) déterminé est comparé dans l'unité de calcul (60, 206) avec au moins une valeur seuil (K_{H}, F_{H}) et une charge correspondante est enregistrée après le dépassement de cette valeur seuil (K_{H}, F_{H}) et la somme de toutes les charges (INT_{LFT}, INT_{LTH}) est calculée et une durée de vie restante (R_{LTH}, R_{LTF}) jusqu'à la destruction intérieure probablement définitive du dispositif de mesure de force (100, 200) est calculée par comparaison avec une valeur maximale (MAX_{LTF}, MAX_{LTH}) des charges autorisées.

2. Procédé selon la revendication 1, **caractérisé en ce qu'**un paramètre, influençant le signal de pesée (S_{LC}) du dispositif de mesure de force (100, 200), du climat de l'espace intérieur (90, 290) est mesuré par le au moins un capteur (50, 250, 251) ou par un capteur (50, 250, 251) supplémentaire, un signal de capteur (S_{TS}) correspondant au paramètre mesuré du climat de l'espace intérieur (90, 290) est comparé dans l'unité de calcul (60, 260) avec une valeur limite d'utilisation supérieure (T_{UOU}) et/ou une valeur limite d'utilisation inférieure (T_{LOU}) et, en cas d'infraction à l'une de ces valeurs limites d'utilisation (T_{UOU}, T_{LOU}), le signal de capteur (S_{TS}) ou un signal de sortie (S_{HSX}) de l'unité de calcul (60, 260) est transmis à une sortie (70, 207).

3. Procédé selon la revendication 1 ou 2, **caractérisé en ce qu'**un signal de capteur (S_{HS}, S_{TS}) d'au moins un paramètre, influençant la durée de vie de la cellule de mesure de force (10, 210) et/ou le signal de pesée (S_{LC}), du climat de l'espace intérieur (90, 290) est déterminé par le au moins un capteur (50, 250, 251) de façon continue ou périodique et/ou aléatoire.

4. Procédé selon l'une des revendications 1 à 3, **caractérisé en ce que** la variation d'un paramètre, influençant la durée de vie de la cellule de mesure de force (10, 210) et/ou le signal de pesée (S_{LC}), du climat de l'espace intérieur (90, 290) est détectée par le au moins un capteur (50, 250, 251) et un signal de capteur (S_{HS}, S_{TS}) correspondant à cette variation est déterminé.

5. Procédé selon la revendication 1, **caractérisé en ce que** le total de toutes les charges (INT_{LTF}, INT_{LTH}), qui agissent sur le dispositif de mesure de force (100, 200), est déterminé par intégration
a) de l'ensemble de la courbe des signaux de capteur (S_{HS}, S_{TS}, S_{LC}) ou
b) de la courbe des signaux de capteur (S_{HS}, S_{TS}, S_{LC}) après dépassement d'une valeur seuil (K_{H}, F_{H}) ou
c) des périodes de temps ((t₂-t₁), (t₄-t₃), (t₇-t₅)), pendant lesquels les signaux de capteur (S_{HS}, S_{TS}, S_{LC}) se situent au-dessus de la ou des valeurs seuils (K_{H}, F_{H})
et **en ce que**, après le dépassement de la valeur maximale (MAX_{LTF}, MAX_{LTH}), l'état du dispositif de mesure de force (100, 200) ou le dépassement de la valeur maximale (MAX_{LTF}, MAX_{LTH}) est transmis à la sortie.

6. Procédé selon l'une des revendications 1 à 5, **caractérisé en ce que** le signal de capteur (S_{HS}, S_{TS}, S_{LC}) amené à la sortie (70, 207) ou le signal de sortie de l'unité de calcul (S_{HSX}) déclenche une alarme et/ou interrompt une opération de mesure et/ou éteint une indication d'attente.

7. Procédé selon l'une des revendications 5 ou 6, **caractérisé en ce que** le au moins un signal de capteur (S_{HS}, S_{TS}, S_{LC}) ou le signal de sortie de l'unité de calcul (S_{HSX}) déclenche une opération d'étalonnage (A_{C}) automatique de la cellule de mesure de force (10, 210) ou bien exige de l'utilisateur /du fabricant un étalonnage (A_{C}) effectué manuellement.

8. Procédé selon l'une des revendications 1 à 7, **caractérisé en ce que**, pour contrôler le au moins un capteur (50, 250, 251), ses signaux de capteur (S_{HS}, S_{TS}, S_{LC}) transmis à l'unité de calcul (60, 206) est contrôlé au moins périodiquement dans l'unité de calcul (60, 206) par une comparaison avec des valeurs de vérification et valeurs de tolérance de vérification stockées dans l'unité de calcul (60, 206) évidente et, en cas d'écart par rapport à ces valeurs de vérification ou en cas d'infraction aux valeurs de tolérance de vérification, une erreur est enregistrée et transmise à la sortie (70, 207).

9. Procédé selon l'une des revendications 1 à 8, **caractérisé en ce qu'**au moins un signal de capteur (S_{HS}, S_{TS}, S_{LC}) est déterminé avant la livraison du dispositif de mesure de force (100, 200), ce signal de capteur (S_{HS}, S_{TS}, S_{LC}) est stocké dans l'unité de calcul comme valeur de référence, et **en ce que**, au moins après la livraison de la cellule de mesure de force, au moins un signal de capteur (S_{HS}, S_{TS}, S_{LC}) est déterminé avec le capteur (50, 250, 251) attribué à la valeur de référence et ce signal de capteur (S_{HS}, S_{TS}, S_{LC}) est comparé avec la valeur de référence.

10. Dispositif de mesure de force (100, 200), approprié pour mettre en oeuvre le procédé selon l'une des revendications 1 à 9 comprenant au moins un boîtier (20, 220) présentant un espace intérieur (80, 280), au moins une cellule de mesure de force (10, 210) intégrée dans l'espace intérieur (80, 280) et au moins un capteur (50, 250, 251) disposé dans l'espace intérieur (80, 280) du boîtier (20, 220) et/ou au moins un capteur (50, 250, 251) disposé sur le boîtier (20, 220), **caractérisé en ce qu'**une unité de calcul est présente, laquelle est appropriée pour comparer le signal de capteur (S_{HS}, S_{TS}, S_{LC}) déterminé dans l'unité de calcul (60, 206) avec au moins une valeur seuil (K_{H}, F_{H}) et, après le dépassement de cette valeur seuil (K_{H}, F_{H}), enregistrer une charge correspondante et calculer la somme de toutes les charges (INT_{LTF}, INT_{LTH}) et calculer, par comparaison avec une valeur maximale (MAX_{LTF}, MAX _{LTH}) des charges autorisées, une durée de vie résiduelle (R_{LTH}, R_{LTF}) autorisée jusqu'à la destruction intérieure probablement définitive du dispositif de mesure de force (100, 200),
a) le au moins un capteur (50, 250, 251) présentant un élément déclencheur, au moins une valeur seuil (K_{H}, F_{H}) et/ou une valeur limite d'utilisation (T_{UOU}, T_{LOU}) d'au moins un paramètre, influençant la durée de vie de la cellule de mesure de force (10, 210), du climat d'espace intérieur (90, 290) étant représenté dans l'élément déclencheur et/ou
b) au moins une unité de sortie contenant la sortie (70, 207) et/ou un convertisseur de mesure (203, 204, 205) et un programme de service (208) exécutant la fonction d'un déclencheur étant attribués au dispositif de mesure de force (100, 200),
b1) le programme de service (208) présentant au moins une valeur qui représente une valeur seuil (K_{H}, F_{H}) et/ou une valeur limite d'utilisation (T_{UOU}, T_{LOU}) d'au moins un paramètre, influençant la durée de vie de la cellule de mesure de force (10, 210), du climat de l'espace intérieur (90, 290) et/ou
b2) une séquence d'instruction étant présente pour interroger au moins une valeur à partir d'un module de stockage, laquelle représente au moins une valeur seuil et/ou une valeur limite d'utilisation et/ou une valeur maximale.

11. Dispositif de mesure de force (100, 200) selon la revendication 10, **caractérisé en ce qu'**un signal de capteur (S_{HS}, S_{TS}) déclenché par l'élément déclencheur peut être transmis à une unité de calcul (60, 206) et/ou à une sortie (70, 207).

12. Dispositif de mesure de force (100, 200) selon l'une des revendications 10 ou 11, **caractérisé en ce qu'**un signal de sortie, déclenché par le programme de service (208), de l'unité de calcul (S_{HSX}) peut être transmis à une sortie (70, 207) et/ou à une autre unité de calcul (60, 206).

13. Dispositif de mesure de force (100, 200) selon l'une des revendications 10 à 12, **caractérisé en ce que** l'unité de calcul (60, 206) et/ou une unité de sortie contenant la sortie (70, 207) sont reliées sans fil ou par fil à au moins un capteur (50, 250, 251).

14. Dispositif de mesure de force (100, 200) selon l'une des revendications 10 à 13, **caractérisé en ce qu'**au moins un capteur (50, 250, 251) est prévu, dans lequel est intégré un module de stockage et/ou un convertisseur de mesure.

15. Dispositif de mesure de force (100, 200) selon l'une des revendications 10 à 14, **caractérisé en ce que** le au moins un capteur (50, 250) est un capteur d'humidité (50, 250), un capteur de pression ou un capteur de température (251).

16. Dispositif de mesure de force (100, 200) selon l'une des revendications 10 à 15, **caractérisé en ce que**, en supplément du au moins un capteur (50, 250, 251), un autre capteur est disposé dans l'espace intérieur (80, 280) du boîtier (20, 220) ou sur le boîtier (20, 220) pour la détection de pointes de tension de secteur dans une alimentation électrique alimentant la cellule de mesure de force (10, 210).

17. Dispositif de mesure de force (100, 200) selon l'une des revendications 10 à 16, **caractérisé en ce que**, en supplément du au moins un capteur (50, 250, 251), au moins un autre capteur est disposé dans l'espace intérieur (80, 280) du boîtier (20, 220) ou sur le boîtier (20, 220) pour la détection de rayonnement radioactif et/ou d'ondes sonores et/ou de coups.

18. Dispositif de mesure de force (100, 200) selon l'une des revendications 10 à 17, **caractérisé en ce qu'**un autre capteur destiné à déterminer un signal de capteur (S_{LC}) en fonction des cycles de charge de la cellule de mesure de force (10, 210) est disposé dans l'espace intérieur (80, 280) du boîtier (20, 220) ou sur le boîtier (20, 220) en supplément du au moins un capteur (50, 250, 251).

19. Dispositif de mesure de force (100, 200) selon l'une des revendications 10 à 18, **caractérisé en ce qu'**un signal de capteur (S_{LC}) peut être déterminé directement à partir du signal de pesée de la cellule de mesure de force (10, 210) en fonction des cycles de charge.
